# EUROPEAN PATENT APPLICATION

(11) **EP 4 148 651 A1**
(43) Date of publication of application: **15.03.2023**
(21) Application number: 21800952.0
(22) Date of filing: 17.02.2021
(51) Int. Cl.: G06Q 40/08, G06Q 50/10

(54) **INFORMATION PROCESSING DEVICE AND PROGRAM**

(30) Priority: 07.05.2020 JP 2020081808
(71) Applicant: Trygle Co.,Ltd., Tokyo, 103-0014 (JP)
(72) Inventor: TOMIMORI, Takeshi, Tokyo 103-0014 (JP); MAEDA, Taketoshi, Tokyo 103-0014 (JP); HABUKA, Kensuke, Tokyo 103-0014 (JP)
(74) Representative: Murgitroyd & Company
(86) International application number: PCT/JP2021/005820
(87) International publication number: WO 2021/225019

(57) **Abstract**

The information processing device comprises: a camera; a camera control unit that controls the camera to capture video of a product to be insured; a receiving unit that receives an application for insurance as a series of processing operations including capturing video of the product; and a transmitting unit that sends to a device at an insurer the application for insurance with a captured still image and/or moving image of the product attached as a series of processing operations including reception of the application for insurance.

## Description

### Technical Field

The present invention relates to a technique used to apply for product insurance.

### Background Art

The liquid crystal display screen in a smartphone can crack when subjected to a strong impact. Damage to a liquid crystal display screen does not occur often, but the repair fee for replacing a damaged liquid crystal display can be high. Therefore, insurance is offered that covers costs related to repairing smartphones.

An insurance policy is taken out during the purchase of a new smartphone. However, users often want to take out an insurance policy sometime after purchasing the smartphone, or after acquiring a second-hand smartphone.

In the case of policies taken out sometime after the smartphone has been purchased, the insurer needs to make sure the screen in the smartphone is not already broken when the policy is taken out.

### Citation List

### Patent Literature

Patent Document 1: JP 6578607 B2
Patent Document 2: JP 2003-162429 A
Patent Document 3: JP 5837001 B2
Patent Document 4: JP 2004-348302 A
Patent Document 5: JP 2010-015299 A

### Summary of Invention

### Technical Problem

Methods have been considered for checking out the condition of a smartphone to be covered by insurance at the counter when a policy is taken out after purchase of the smartphone, but it would be more convenient to check on the condition of the smartphones and receive insurance applications over the internet rather than face-to-face.

In addition to smartphones, there is anticipated demand for insurance that compensates for repair costs to products already in use, such as home appliances, automobiles, and household furniture. In order to realize insurance as a web service, the ability to check on the condition of products without examining them directly is required.

The present invention was devised as a way to solve this problem, and the primary object of the present invention is to make it easier to check on the condition of the product to be insured when a product insurance policy is taken out.

### Solution to Problem

One aspect of the present invention is an information processing device comprising: a camera; a camera control unit that controls the camera to capture video of a product to be insured; a receiving unit that receives an application for insurance as a series of processing operations including capturing video of the product; and a transmitting unit that sends to a device at an insurer the application for insurance with a captured still image and/or moving image of the product attached as a series of processing operations including reception of the application for insurance.

### Effect of Invention

The present invention makes it easier to check on the condition of the product to be insured when a product insurance policy is taken out.

### Brief Description of Drawings

Fig. 1 shows an example of a configuration for an insurance service system.
Fig. 2 (A) shows the initial screen, Fig. 2 (B) shows the guidance screen for capturing video, and Fig. 2 (C) shows the live view screen.
Fig. 3 (A) shows the countdown screen, Fig. 3 (B) shows the screen for capturing video, and Fig. 3 (C) shows the captured video.
Fig. 4 is a functional block diagram of a smart phone.
Fig. 5 is a functional block diagram of a display processing unit.
Fig. 6 is a flowchart showing main processing steps performed by the smart phone.

### Description of Embodiments

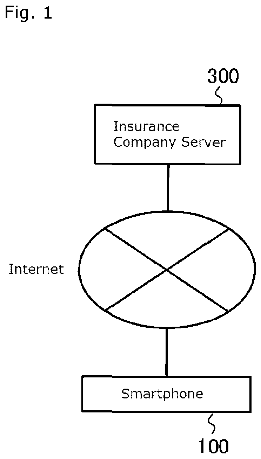

Fig. 1 shows an example of a configuration for an insurance service system. A smartphone 100 can connect to the insurance company server 300 via the internet. The insurance company server 300 is a server operated by an insurance company. Here, the user who owns the smartphone 100 intends to purchase smartphone insurance that covers the smartphone 100 itself. Also, a smartphone application (native application) for taking out insurance has been installed on the smartphone 100.

In the present embodiment, a user applies for smartphone insurance via a web service, video of the front of the smartphone 100 is captured by taking a selfie of the smartphone 100 in mirror in order to show the insurer the condition of the liquid crystal display screen on the smartphone 100, which is the product to be covered by insurance.

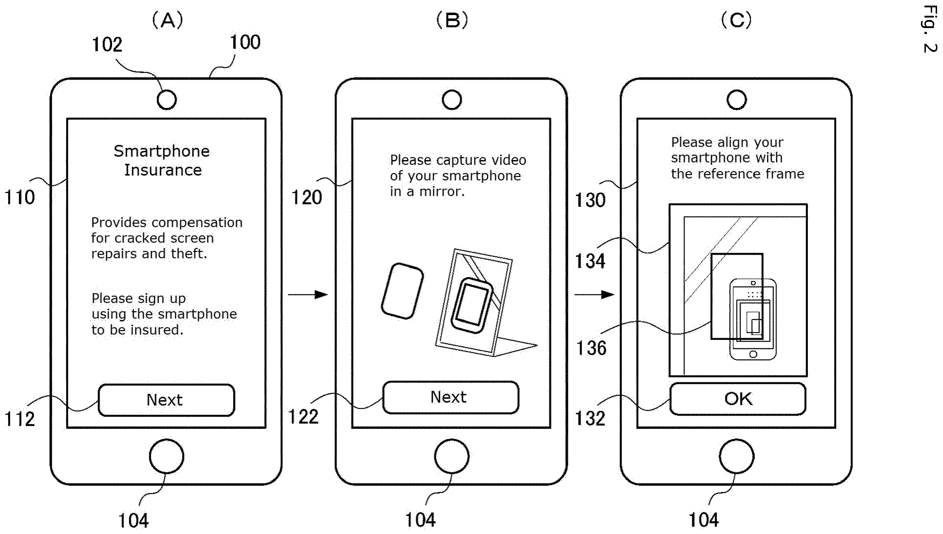

Fig. 2 (A) shows the initial screen 110. The front side of the smartphone 100 has a touch panel combining a liquid crystal display with a touch sensor, an inward-facing camera 102, and a home button 104. The inward-facing camera 102 on the front side is used to take "selfies". An outward-facing camera (not shown) is also provided on the back side of the smartphone 100. The outward-facing camera is used to take pictures of other people and scenery like a ordinary digital camera.

When the smartphone application is launched, an initial screen 110 is displayed on the liquid crystal display screen of the smartphone 100. For example, a summary of the smartphone insurance can be displayed, stating that the smartphone insurance "provides compensation for cracked screen repairs and theft." Here, "screen" refers to the liquid crystal display screen. An instruction can also be displayed that reads, "Please sign up using the smartphone to be insured." In the present embodiment, an insurance policy can only be taken out using the smartphone 100 that is to be covered by the insurance. In other words, the smartphone 100 used to apply for the insurance policy is the item to be insured. A user who accepts this condition touches the next button 112. The same operation may be performed by pressing the home button 104 instead of the next button 112.

Fig. 2 (B) shows the guidance screen 120 for capturing video. When the next button 112 is touched on the initial screen 110, the guidance screen 120 for capturing video is displayed on the liquid crystal display screen of the smartphone 100. For example, a guidance message is displayed that reads, "Please capture video of your smartphone in a mirror." A graphic is also displayed showing how video of the smartphone 100 should be captured with the front side of the smartphone 100 facing the mirror. In the present embodiment, video of a reflection of the smartphone 100 in a mirror is captured by the inward-facing camera 102 in the smartphone 100 so that the insurer can check on the condition of the screen. Once the user understands how the video is to be captured, the user touches the next button 122. The same operation may be performed by pressing the home button 104 instead of the next button 122.

Fig. 2 (C) shows the live view screen 130. When the next button 122 has been touched on the guidance screen 120 for capturing video, the live view screen 130 is displayed on the liquid crystal display screen of the smartphone 100. Live video obtained by the inward-facing camera 102 in the smartphone 100 is displayed in the live view area 134. When the front side of the smartphone 100 has been turned toward the mirror, a reflected image of the smartphone 100 is captured in the live video. A reference frame 136 is displayed near the center of the live view area 134. The user is prompted to adjust the position and orientation of the smartphone 100 so that the image of the smartphone 100 is aligned with reference frame 136. This is done by displaying the message "Please align your smartphone with the reference frame." The reference frame may be displayed in a color that stands out, such as red or blue. In this case, the message may read "Please align your smartphone with the red reference frame." In the example shown in Fig. 2(C), the upper left corner of the image of the smartphone 100 is inside the reference frame 136. Note that the user holding the smartphone 100 has been omitted from this figure.

The user looks at the live view video of the smartphone 100 in the mirror and adjusts the position and orientation of the smartphone 100 so that video of the smartphone 100 fits inside the reference frame 136. Once video of the smartphone 100 fits inside the reference frame 136, the user touches the OK button 132. The same operation may be performed by pressing the home button 104 instead of the OK button 132.

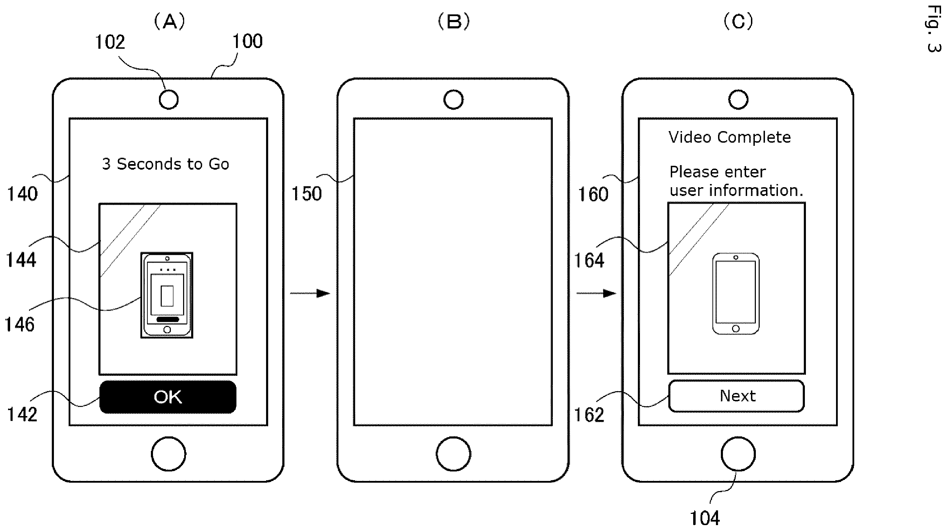

Fig. 3 (A) shows the countdown screen 140. When the OK button 132 has been touched on the live view screen 130, the countdown for capturing video starts. A countdown screen 140 is displayed on the liquid crystal display screen of the smartphone 100 while the countdown is in progress. The countdown screen 140 includes a live view area 144 similar to the live view area 134 in the live view screen 130. In the example shown in Fig. 3A, an image of the entire smartphone 100 is inside the reference frame 146. During the countdown, the user can make fine adjustments to the position and orientation of the smartphone 100. Note that a reverse image of the OK button 142 is displayed in black and white during the countdown.

Fig. 3 (B) shows the screen for capturing video 150. The countdown screen 140 is switched to the screen for capturing video 150 during the countdown right before video is to be captured. In the screen for capturing video 150, a background image is displayed that makes screen cracks easier to identify. In this example, an all-white background image is displayed as the screen for capturing video 150. The screen for capturing video 150 is not limited to this example, and may be a bright image, a solid color image, or a pattern that makes it easier to identify screen cracks. A still image is captured by the inward-facing camera 102 when video is captured. The captured video image in this example is a still image, but a moving image may also be captured. Both a still image and moving image may be captured.

Fig. 3 (C) shows the captured video 160. After video has been captured with the inward-facing camera 102, a captured video screen 160 is displayed on the liquid crystal display screen of the smartphone 100. The captured video area 164 displays captured video, that is, a still image captured by the inward-facing camera 102. The video image of the liquid crystal display screen in the smartphone 100 when video was being captured shows the screen for capturing video 150. If the liquid crystal display is damaged, traces of damage will appear on the screen for capturing video 150. In other words, cracks appear in the video image.

Next, the message "Please enter user information" is displayed to receive user information that is to be entered such as the user's name and address. After checking the captured video image, the user touches the next button 162. The same operation may be performed by pressing the home button 104 instead of the next button 162.

When the next button 162 has been touched on the captured image screen 160, a user information entry screen (not shown) is displayed. The user information entry screen receives user information that has been entered such as the user's name, address, telephone number, and e-mail address. The smartphone 100 then sends insurance application information to an insurance company server 300. The insurance application information includes user information, device information on the smartphone 100 (for example, model code and serial number), and captured video images. The device information can be obtained from the operating system.

When the insurance company server 300 receives the insurance application information, it sends notification to the smartphone 100 that the insurance application has been received. When notification is received that the insurance application has been received by the insurer, the smartphone 100 displays a message that the smartphone insurance application process has been completed, and ends the main processing.

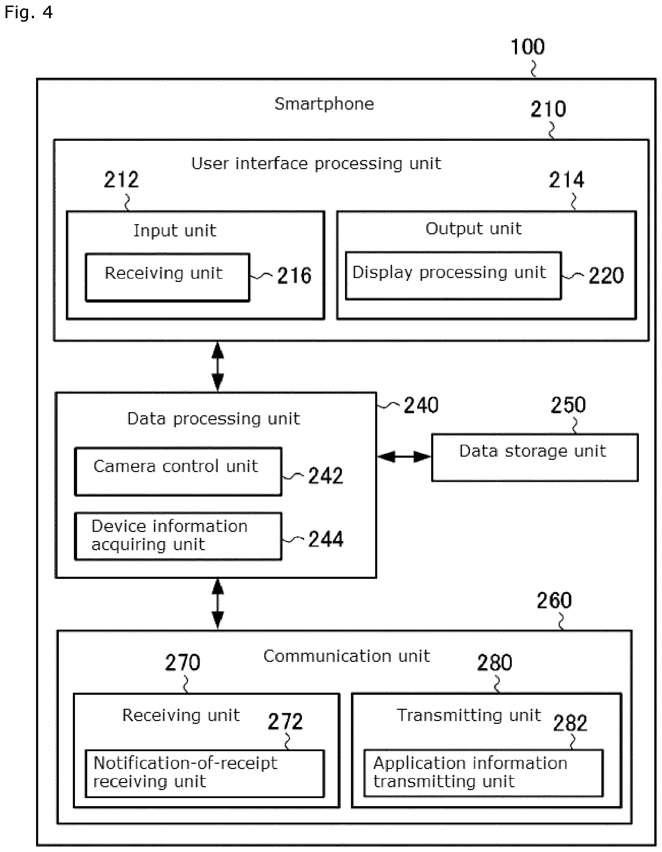

Fig. 4 is a functional block diagram of a smart phone 100. The configurational elements of the smartphone 100 include computing units such as a central processing unit (CPU) and other coprocessors, storage devices such as memory, and other types of hardware connected to each other via wired or wireless communication, as well as software that is stored in a storage device and that supplies processing instructions to the computing units. Computer programs include device drivers, an operating system, application programs located in higher layers, and a library that provides common functions to these programs. Each block in the figure denotes either a hardware unit or a functional unit.

The smartphone 100 includes a user interface processing unit 210, a data processing unit 240, a communication unit 260, and a data storage unit 250. The user interface processing unit 210 performs user interface processing via a touch panel and speaker, etc. The communication unit 260 performs communication processing via the network. The data storage unit 250 stores various types of data. The data processing unit 240 executes various types of processing based on data acquired by the communication unit 260 and data stored in the data storage unit 250. The data processing unit 240 also functions as an interface for the user interface processing unit 210, the communication unit 260, and the data storage unit 250.

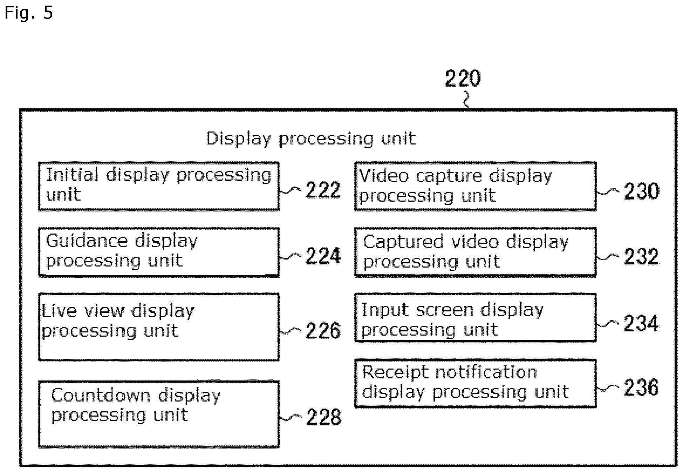

The user interface processing unit 210 includes an input unit 212 that receives operations inputted by the user and an output unit 214 that provides information to the user. The input unit 212 includes a receiving unit 216 that receives button touch operations and user information input operations. The output unit 214 includes a display processing unit 220 that displays different screens on the liquid crystal display. The display processing unit 220 will be described in detail with reference to Fig. 5.

The data processing unit 240 includes a camera control unit 242 and a device information acquiring unit 244. The camera control unit 242 controls the inward-facing camera 102 and the outward-facing camera (not shown) in order to capture video. The device information acquiring unit 244 acquires device information (for example, the model code, serial number, etc.) on the smartphone 100 from the operating system.

The communication unit 260 includes a transmitting unit 280 that transmits data and a receiving unit 270 that receives data. The transmitting unit 280 includes an insurance application information transmitting unit 282 that transmits insurance application information (including user information, device information, and captured images) to an insurance company server 300. Receiving unit 270 includes a notification-of-receipt receiving unit 272 that receives notification of receipt of the insurance application from the insurance company server 300.

Fig. 5 is a functional block diagram of a display processing unit 220. The display processing unit 220 includes an initial display processing unit 222, a guidance display processing unit 224, a live view display processing unit 226, a countdown display processing unit 228, a video capture display processing unit 230, a captured video display processing unit 232, an input screen display processing unit 234, and a receipt notification display processing unit.

The initial display processing unit 222 displays the initial screen 110 (Fig. 2(A)) on the liquid crystal display of the smartphone 100. The guidance display processing unit 224 displays the guidance screen for capturing video 120 (Fig. 2(B)) on the liquid crystal display of the smartphone 100. The live view display processing unit 226 displays the live view screen 130 (Fig. 2(C)) on the liquid crystal display of the smartphone 100. The countdown display processing unit 228 displays the countdown screen 140 (Fig. 3(A)) on the liquid crystal display of the smartphone 100. The video capture display processing unit 230 displays the screen for capturing video 150 (Fig. 3(B)) on the liquid crystal display of the smartphone 100. The captured video display processing unit 232 displays the captured video screen 160 (Fig. 3(C)) on the liquid crystal display of the smartphone 100. The input screen display processing unit 234 displays a user information entry screen (not shown) on the liquid crystal display of the smartphone 100. The receipt notification display processing unit 236 displays on the liquid crystal display of the smartphone 100 that an insurance application has been received.

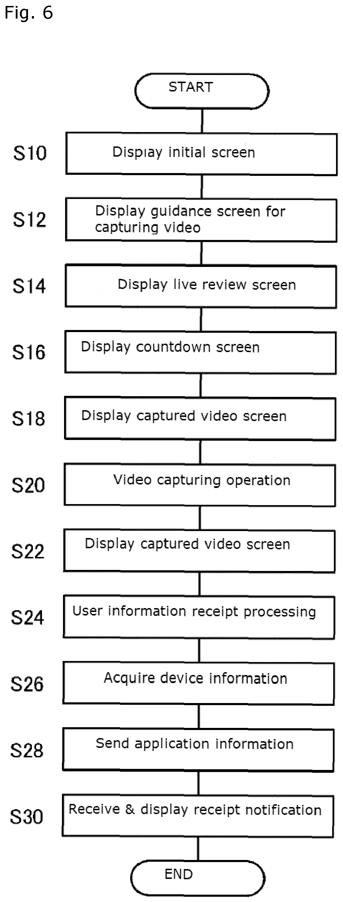

Fig. 6 is a flowchart showing main processing steps performed by the smart phone 100. When the smartphone application is launched, the initial display processing unit 222 displays the initial screen 110 (Fig. 2(A)) on the liquid crystal display of the smartphone 100 (S10). When the receiving unit 216 receives a touch operation from the next button 112 on the initial screen 110, the guidance display processing unit 224 displays the guidance screen for capturing video 120 (Fig. 2(B)) on the liquid crystal display of the smartphone 100 instead of the initial screen 110 (S12).

When the receiving unit 216 receives a touch operation from the next button 122 on the guidance screen for capturing video 120, the live view display processing unit 226 displays the live view screen 130 (Fig. 2(C)) instead of the guidance screen for capturing video 120 on the liquid crystal display of the smartphone 100. The camera control unit 242 also controls the inward-facing camera 102 to generate a live view of the frame images continuously obtained from the inward-facing camera 102. The live view display processing unit 226 displays live view video in the live view area 134 of the live view screen 130 (S14).

When the receiving unit 216 receives a touch operation from the OK button 132 on the live view screen 130, the countdown display processing unit 228 starts the countdown and displays a countdown screen 140 (Fig. 3(A)) on the liquid crystal display of the smartphone 100 (S16). The countdown display processing unit 228 switches the "X seconds to go" count display based on the actual count. While the countdown is in progress, the countdown display processing unit 228 displays live view video in the live view area 144 of the countdown screen 140, in a manner similar to the live view display processing unit 226.

Immediately before the countdown ends and the timing for capturing video is reached, the video capture display processing unit 230 displays the screen for capturing video 150 (Fig. 3(B)) on the liquid crystal display of the smartphone 100 instead of the countdown screen 140 (S18). In this example, an all-white background image is displayed as the screen for capturing video 150. Video with a uniform background makes it easier to identify screen cracks. The entire screen may also have a uniform striped pattern or a uniform lattice pattern. The camera control unit 242 then controls the inward-facing camera 102 so that the inward-facing camera 102 performs a video capturing operation (S20). The camera control unit 242 obtains video captured by the inward-facing camera 102.

After the inward-facing camera 102 has finished capturing video, the captured video display processing unit 232 displays the captured video screen 160 (Fig. 3(C)) instead of the screen for capturing video 150 on the liquid crystal display of the smartphone 100 (S22). At this time, the captured video display processing unit 232 displays captured video in the captured video area 164.

When the receiving unit 216 receives a touch operation from the next button 162 on the captured video screen 160, the smartphone 100 executes user information reception processing (S24). In the user information reception processing, the input screen display processing unit 234 displays the user information entry screen on the liquid crystal display of the smart phone 100. The receiving unit 216 then receives entered user information such as the user's name, address, telephone number, and e-mail address.

When the receiving unit 216 has received entered user information and receives a touch operation from the apply button (not shown) that issues an instruction to submit an insurance application, the device information acquiring unit 244 acquires device information on the smartphone 100 from the operating system (S26). In a specific example, the model code and the serial number for the device are obtained. A model code is an example of information identifying the type of product. A serial number is an example of information that identifies an individual product. This saves the user the trouble of having to enter device information and prevents keying errors.

The application information transmitting unit 282 sends insurance application information (including user information, device information, and captured video) to the insurance company server 300 (S28). When the insurance company server 300 receives the insurance application information, it returns a receipt notification to the smartphone 100.

When the notification-of-receipt receiving unit 272 receives the notification, the receipt notification display processing unit 236 displays on the liquid crystal display of the smartphone 100 a message that the insurance application has been received (S30).

Afterward, the insurance company studies whether or not to accept the application for smartphone insurance based on the user information, the device information, and the captured video included in the insurance application information. For example, if the captured video shows a cracked screen on the smartphone 100, the purchase of insurance is not permitted. After completing the review, the insurance company server 300 notifies the smart phone 100 of the results of the review. The insurance company server 300 may also automatically detect screen cracks using image recognition processing.

In the present embodiment, insurance application information including captured video of the product is sent to an insurance company server 300 as a series of processing operations including capturing video of the product. In other words, only video captured with the smartphone application can be included in the insurance application information. For example, images in a saved pictures folder cannot be used to apply for insurance in order to prevent fraud such as attaching old video images prior to damage. Images received from other smartphones also cannot be used. This makes it possible to prevent fraud such as submitting video captured by a friend's smartphone as video captured by one's own smartphone. Because this reduces the risk of the insurance company being deceived, insurance premiums low can be kept low.

### Examples of Modifications

An image analyzing unit (not shown) may extract the video of the smartphone 100 included in the live view area of the live view screen 130 (Fig. 2(C)). Here, the image analyzing unit may determine whether or not the image of the smartphone 100 is inside the reference frame 136. When the image of the smartphone 100 is inside the reference frame 136, the image analyzing unit may determine that the conditions for capturing video have been satisfied. When the image analyzing unit has determined that the conditions for capturing video have been satisfied, an audio output unit (not shown) may output the message "The image is correctly positioned. Please touch the OK button." This starts the countdown. Alternatively, the camera control unit 242 may control the inward-facing camera 102 and automatically get the inward-facing camera 102 to perform the video capturing operation once the image analyzing unit has determined that the video capturing conditions have been satisfied. A reference frame 136 is just one example of a positioning reference for aligning the image of the smartphone 100.

The image analyzing unit may also identify the direction in which the image of the smartphone 100 deviates from the reference frame 136 in the live view area. Depending on the direction in which it deviates from the reference frame, the audio output unit may then output audio messages with instructions such as "Please move the smartphone to the left.", "Please move the smartphone to the right.", "Please move the smartphone upward.", or "Please move the smartphone downward."

The live view display processing unit 226 may display a QR code (registered trademark) instead of a reference frame 136 on the live view screen 130 (Fig. 2(C)). The QR code included in the captured image may then be recognized by a QR code recognizing unit (not shown). The QR code recognizing unit may determine that the conditions for capturing video have been satisfied when the QR code included in the captured video is recognized. The QR code recognizing unit recognizes the QR code included in the captured video, and if the position of the recognized QR code is within a reference range (for example, a predetermined area near the center), it determines that the conditions for capturing video have been satisfied. The size of the QR code included in the reference range may be added to the video capturing conditions. A QR code is an example of a graphic used to recognize position and size. A graphic recognizing unit (not shown) may determine whether the video capturing conditions have been met using a predetermined graphic other than a QR code. When the QR code recognizing unit or graphic recognizing unit determines that the video capturing conditions have been satisfied, an audio output unit (not shown) may output the message "The image is correctly positioned. Please touch the OK button." This starts the countdown. Alternatively, the camera control unit 242 may control the inward-facing camera 102 and automatically get the inward-facing camera 102 to perform the video capturing operation once the QR code recognizing unit or graphic recognizing unit determines that the video capturing conditions have been satisfied. The content of the data represented by the QR code may be the same or different each time. If a different QR code is used each time, it becomes difficult to create a fake image that mimics an image reflected in a mirror and makes it easier to prevent fraud. A QR code is just one example of a graphic code. A barcode may be used instead of a QR code.

The QR code recognizing unit may identify the direction in which the smartphone 100 deviates based on the position of the QR code. Also, the pattern recognizing unit may identify the direction in which the smartphone 100 deviates based on the position of the predetermined pattern. Depending on the direction in which it deviates, the audio output unit may then output an audio message with an instruction such as "Please move the smartphone to the left."

The smartphone 100 may acquire the data content represented by a QR code from the server 300. Also, the live view display processing unit 226 may reverse QR code left to right before displaying it so that the QR code appears normal when reflected in a mirror. Alternatively, the QR code recognizing unit may detect a figure similar to a QR code in captured video, invert the figure, and then recognize it as a QR code.

In the present embodiment, video is captured once. However, video may be captured multiple times. A plurality of still images may then be included in the application information. Also, a different background image may be displayed on the screen for capturing video 150 (Fig. 3(B)) each time video is captured. This is because the background image in which a crack is likely to be revealed may differ depending on the state of the crack. Capturing video using multiple background images makes it easier to identify cracks in different states.

In the present embodiment, the camera control unit 242 captures a still image. However, the camera control unit 242 may capture moving video. Because moving video includes a large number of frames of video, a suitable frame of video can be selected for more reliable crack recognition. Also, the background image displayed on the screen for capturing video 150 (Fig. 3(B)) may be switched while capturing moving video. As mentioned above, use of multiple background images makes it easier to identify cracks in various states. The moving video is included in the application information as captured video. Also, both moving video and a still image may be included in the application information as captured video.

The captured video display processing unit 230 may display the current date and time superimposed on the captured video screen 150 (Fig. 3(B)). A captured video verifying unit (not shown) may retrieve the current date and time appearing in the captured video and determine that the captured video is fraudulent if the retrieved current date and time do not match the date and time that the video capturing operation was performed. The captured video display processing unit 230 may display the current date and time by reversing them from left to right. The captured video verifying unit may retrieve the current date and time after reversing the area corresponding to the current date and time from left to right.

The embodiment and examples of modifications described above may be used to cover a tablet or notebook by insurance instead of a smartphone.

The smartphone application described in the embodiment and examples of modifications does not have to be a native application. For example, a web application may be used to realize the processing described in the embodiment and examples of modifications.

The insured item may also be, for example, household electrical equipment, an automobile, or household furniture. In this case, the camera control unit 242 is used to control an outward facing camera (not shown) to capture an image of the insurance item. Here, the method used to display the reference frame superimposed on the live view image from the outward facing camera is the same as that used in the embodiment and the examples of modifications. The method used to apply for insurance is also the same as that used in the embodiment and the examples of modifications.

Note that the present invention is not limited to the embodiment and examples of modifications described above, and can be embodied by making modifications to the constituent elements without departing from the scope and spirit of the invention. Various aspects of the invention may be devised by combining constituent elements disclosed in the embodiment and examples of modifications described above in different ways. Also, some of the constituent elements may be removed from the constituent elements described in the embodiment and the example of modifications described above.

## Claims

1. An information processing device comprising:
a camera;
a camera control unit that controls the camera to capture video of a product to be insured; a receiving unit that receives an application for insurance as a series of processing operations including capturing video of the product; and
a transmitting unit that sends to a device at an insurer the application for insurance with a captured still image and/or moving image of the product attached as a series of processing operations including reception of the application for insurance.

2. The information processing device according to claim 1, wherein the product to be insured is the information processing device itself, and
the camera control unit controls the inward-facing camera to capture video of the information processing device reflected in a mirror.

3. The information processing device according to claim 1 or 2, further comprising a live view display processing unit for superimposing and displaying a positional reference to be aligned with video of the product in the live view video obtained from the camera, and
the camera control unit automatically captures video when it has determined that a video image of the product is aligned with the positional reference.

4. The information processing device according to claim 2, further comprising a display processing unit for capturing video that displays a predefined image on the entire screen when video is being captured.

5. A program causing an information processing equipped with a camera to realize:
a function of controlling the camera to capture video of a product to be insured;
a function of receiving an application for insurance as a series of processing operations including capturing video of the product; and
a function of sending to a device at an insurer the application for insurance with a captured still image and/or moving image of the product attached as a series of processing operations including reception of the application for insurance.
